# EUROPEAN PATENT APPLICATION

(11) **EP 4 851 612 A1**
(43) Date of publication of application: **09.12.2026**
(21) Application number: 26182348.8
(22) Date of filing: 01.06.2026
(51) Int. Cl.: G01N 22/04

(54) **SYSTEM AND METHOD FOR CALIBRATED MEASUREMENT OF MOISTURE CONTENT IN A MATERIAL**

(30) Priority: 03.06.2025 BE 202505351
(71) Applicant: Hammer-Ims, 3540 Herk-de-Stad (BE)
(72) Inventor: REDANT, Tom, 3570 Alken (BE); GOOSSENS, Bart, 3201 Aarschot (BE)
(74) Representative: Winger

(57) **Abstract**

A system (1) for measuring moisture content in a material (2) comprises a sensor device (3) with a transmitter (4) and a receiver (5), arranged to transmit millimetre waves (6a) through the material (2) and to receive the transmitted signal (6b), in order to obtain a measurement value, related to the moisture content of the material (2) at a specific location; a calibration mechanism (7), arranged to perform calibration measurements; and a computing unit (11) to calibrate the obtained measurement value by means of the calibration value and the attenuation value of the calibration sample; wherein the system is integrated into a scanning device (12), which is arranged such that the sensor device (3) and the width of the material (2) move relative to each other, in order to obtain a cross-section of the moisture content of the material (2).

## Description

### Field of application of the invention

The present invention relates to the field of measuring systems, and more specifically to systems for measuring moisture in materials.

### Background of the invention

The measurement and control of moisture content plays an important role in various industrial production processes, including the manufacture of insulation materials, textiles and other woven and non-woven materials. Monitoring moisture during production contributes to the quality control of finished products and may lead to optimization of energy consumption, particularly, for example, in processes wherein drying operations are performed using gas-fired ovens.

In industrial environments, various technologies are applied for moisture measurements, including optical sensors, nuclear technology, X-ray technology, ultrasonic systems, and inductive or capacitive measurement techniques. Millimetre wave technology offers an alternative approach to moisture measurement, as these waves can penetrate many non-metallic materials, regardless of their transparency or surface condition.

Various challenges arise when implementing moisture sensors in industrial environments. Measurement values may vary due to changing environmental factors such as temperature, humidity, and dust. Sensors may also exhibit drift over time, causing measurement results to gradually become less dependable. These factors make it difficult to obtain stable and reliable moisture measurements, especially in harsh industrial conditions.

Performing moisture measurements across the full thickness of materials presents an additional challenge. In many existing measurement techniques, only the surface or a limited depth of the material is measured, meaning that moisture, which is present deeper within the material, may remain undetected. This may lead to inaccurate determination of the total moisture content.

Calibration of the measuring system is important for accurate moisture measurements. Developing suitable calibration procedures and reference materials that remain stable under industrial conditions remains a complex task. With aqueous calibration materials, problems may arise such as evaporation, uneven moisture distribution, or degradation over time.

Another aspect in industrial applications is the need to measure moisture profiles across the breadth of produced materials. Obtaining this information may be valuable for process optimization, but requires measurement systems that can operate in scan mode or sample multiple measurement points.

In production lines where materials are manufactured continuously, the movement of the material relative to the sensor may affect measurement accuracy. Changes in the distance between the sensor and the material may lead to variations in measurement results that are not related to actual changes in moisture content.

The distinction between relative and absolute moisture values is also relevant in many industrial contexts. While some processes benefit from monitoring changes in moisture content, other applications require accurate determination of absolute values, such as the exact number of grams of water per square meter of material.

In the field of moisture measurement, challenges remain in developing systems that are dependable, accurate, and practically applicable in industrial environments. Although progress has been made, there is room for improvements in measurement technologies that can handle the aforementioned complicating factors.

### Summary of the invention

It is an objective of embodiments of the present invention to enable consistent and accurate moisture measurements in industrial production processes. This objective is achieved by the aspects of the present invention.

In a first aspect, the present invention relates to a system for measuring moisture content in a material. The system comprises a sensor device, a calibration mechanism, a control unit, and a computing unit.

The sensor device has a transmitter and a receiver and is arranged to transmit millimetre waves through the material and to receive the transmitted signal, in order to obtain a measurement value, related to the moisture content of the material at a specific location. It is an advantage of embodiments of the current invention that millimetre waves are used, which are resistant to, for example, dust and mist, thereby enabling measurements under severe industrial conditions. It is an advantage of embodiments of the current invention that robust antenna structures can be deployed which are less sensitive than conventional optical techniques.

The calibration mechanism is arranged for performing calibration measurements. The calibration mechanism comprises one or more calibration samples, each consisting of a material with a predetermined and reproducible attenuation value for millimetre waves, wherein the attenuation value is representative of a specific moisture content; and positioning means, arranged to place at least one of the calibration samples into the propagation path of the millimetre waves between the transmitter and the receiver in order to obtain a calibration value. It is an advantage of embodiments of the present invention that an integrated calibration mechanism is provided to suppress slow drift in the measured values.

The control unit is configured to periodically activate the positioning mechanism.

The computing unit is configured to calibrate the obtained measurement value using the acquired calibration value and the attenuation value of the calibration sample. The computing unit can implement any meaningful calibration model. For example, the computing unit can implement an advanced calibration model that uses multivariate regression to model the relationship between signal attenuation and moisture content. The model can take into account the amplitude and/or phase shift of the signal, resulting in high accuracy for absolute moisture content.

The moisture content measurement system is integrated into a scanning device, arranged such that the sensor device and the width of the material move relative to each other, in order to obtain a cross-section of the moisture content of the material. The scanning device can utilize a dual axis of movement: a frame onto which the sensor device is mounted can move across the width of the material to be measured, while the material itself moves lengthwise. This configuration enables a diagonal scan pattern, resulting in a more detailed moisture map of the material. In special embodiments, the scan speed can preferably be automatically adjusted to the production line speed at which the material is produced.

In embodiments, the positioning means can be arranged to place at least one of the calibration samples into the propagation path of the millimetre waves between the transmitter and the receiver in an automatic and repeatable manner. This ensures reliable and consistent calibration without human intervention.

In embodiments, the positioning means can be arranged to linearly move one or more calibration samples into the path of the millimetre waves. This enables accurate and controlled positioning of the calibration samples.

In embodiments, the control unit can be configured to periodically activate the positioning mechanism, based on a preset time interval or predetermined measurement conditions, such that automatic calibration of the system takes place. This ensures an optimal calibration strategy, tailored to the specific measurement conditions or user needs. A hybrid approach to activating calibration is also possible, for example, under normal conditions, calibration is performed after a predetermined period, but immediate calibration is initiated when significant changes in environmental factors such as temperature, humidity, or dust concentration are detected.

In embodiments, the calibration sample can be formed by an absorbent support material wherein a predetermined amount of water is homogeneously distributed, and which is enclosed by an airtight and watertight casing, such that the attenuation value corresponds to a defined moisture content. This ensures a stable and reliable reference.

In embodiments, the absorbent support material can be a non-biodegradable non-woven material. This prevents degradation of the material over time and ensures a long-term stable calibration sample.

In embodiments, the calibration sample can be formed by a radio-absorbent material, wherein the thickness of the radio-absorbent material corresponds to a reproducible attenuation value. This provides an alternative calibration method that is easy to produce and maintain.

In embodiments, the radio-absorbent material can be made from carbon-loaded foams, for example, PU foam, impregnated with carbon. Such a PU foam has predictable and stable radio-absorbent properties that enable reliable calibration.

In embodiments, the calibration sample can be formed by multiple layers of a radio-absorbent material. Multiple layers allow for a finer tuning of the calibration reference, leading to higher accuracy.

In embodiments, the scanning device can comprise a C-frame or an O-frame. These frame constructions provide the necessary rigidity and positioning accuracy for reliable measurements across the full width of the material.

In embodiments, the transmitter can be arranged to transmit millimetre waves in a frequency band between 50 and 90 GHz, for example in a frequency band between 50 and 70 GHz. This frequency band offers an optimal balance between penetration depth and sensitivity to moisture in many industrial materials.

In embodiments, at least two calibration samples can be mounted on a common movable support structure. This enables multi-point calibration without the need for multiple separate positioning mechanisms, making the system more compact and cost-effective. It is an advantage of embodiments of the current invention that multiple reference samples can be mounted on a movable support structure for automatic calibration at different attenuation levels.

In a second aspect, the present invention relates to a method for measuring moisture content in a material, comprising the steps of: transmitting millimetre waves via a transmitter through a material to be measured and receiving the transmitted signal by a receiver, positioned on an opposite side of the material relative to the transmitter, in order to obtain a measurement value, related to the moisture content of the material at a specific location; periodically performing a calibration measurement procedure, comprising: selecting at least one calibration sample with a predetermined and reproducible attenuation value for millimetre waves, wherein the attenuation value is representative of a specific moisture content and positioning the selected calibration sample into the propagation path of the millimetre waves between the transmitter and the receiver in order to obtain a calibration value; using the calibration value and the attenuation value of the calibration sample to calibrate the measurement value; moving the transmitter-receiver combination and the width of the material relative to each other; and repeating the steps of transmitting millimetre waves, calibrating measured values, and moving the transmitter-receiver combination and the material to be measured relative to each other, in order to obtain a cross-section of the moisture content of the material.

In embodiments, periodically performing the calibration measurement procedure can be carried out, based on a preset time interval or predetermined measurement conditions. This ensures an optimal balance between measurement efficiency and calibration accuracy.

In embodiments, the step of performing a calibration measurement procedure may comprise: sequentially positioning at least two different calibration samples, each with a different reproducible attenuation value for millimetre waves, into the propagation path between the transmitter and the receiver; obtaining at least two corresponding calibration values; and constructing a calibration function, based on the relationship between the attenuation values of the calibration samples and the corresponding calibration values, for performing a two-point calibration of the measured value. Two-point calibration increases the accuracy of measurements over a wider range of moisture levels. It is an advantage of embodiments of the present invention that a two-point calibration can be performed by employing two different attenuation levels.

In embodiments, the calibration step may involve using the calibration values, obtained from at least two different calibration samples with different known attenuation levels, to determine a relationship between attenuation and moisture content. This allows to construct an accurate correlation curve between attenuation and moisture content, leading to more reliable measurements.

In embodiments, the determined relationship can be linear. A linear relationship simplifies the calibration procedure and enables fast, reliable conversion of measured values into moisture contents.

In a third aspect, the present invention relates to a computer program product comprising instructions which, when executed by a computer, cause a moisture measurement system with millimetre waves to perform the method according to the second aspect.

In a fourth aspect, the present invention relates to a computer-readable medium containing program code, comprising instructions which, when executed by one or more processors, cause a moisture measurement system with millimetre waves to perform the method according to the second aspect.

It is an advantage of embodiments of the present invention that the material can be measured on both sides, such that moisture, located deep in the core, can be analysed.

It is an advantage of embodiments of the present invention that material thicknesses up to approximately 300 mm can be tested without significant disturbance of the measurement.

It is an advantage of embodiments of the present invention that the positioning of the transmitter and receiver in a transmissive arrangement results in an accurate determination of the moisture content.

It is an advantage of embodiments of the present invention that the measuring head or the calibration sample can move linearly within a machine, such that the calibration and measurement continue to take place under real production conditions.

It is an advantage of embodiments of the present invention that a complete scan across the width of the material can be made in combination with a C-frame or O-frame.

It is an advantage of embodiments of the present invention that the measuring setup forms a stress-free structure that can be adapted to different production lines.

It is an advantage of embodiments of the present invention that the system is suitable for inline applications with high reproducibility and accuracy of moisture measurement.

Certain and preferred aspects of the invention are set out in the attached independent and dependent claims. Features of the dependent claims may be combined with features of the independent claims and with features of other dependent claims, as is appropriate and not only as explicitly set out in the claims.

The above and other characteristics, properties and benefits of the present invention will be evident from the following detailed description, in conjunction with the attached drawings, which illustrate, by way of example, the principles of the invention. This description is given solely as an example, without limiting the scope of the invention. The reference figures mentioned below refer to the attached drawings.

### Short description of the figures

The invention will now be described in further detail, by way of example, with reference to the accompanying figures.
FIG. 1 is a schematic representation of the measuring principle of the moisture content measurement system according to embodiments of the invention.
FIG. 2 is a 3D view of a sensor module, capable of functioning as a transmitter or receiver according to embodiments of the invention.
FIG. 3A and FIG. 3B are schematic representations of a parking position of the calibration sample in the system according to embodiments of the invention.
FIG. 4A and FIG. 4B are schematic representations of a completed state of the system according to embodiments of the invention.
FIG. 5A and FIG. 5B are schematic representations of a calibration position wherein the calibration sample is located under the measuring head, in accordance with embodiments of the invention.
FIG. 6 is a schematic representation of a calibration sample according to specific embodiments of the invention.
FIG. 7 is an illustrative representation of a movable support structure for calibration samples, according to embodiments of the invention.
FIG. 8 is a graphical representation of a linear model for the relationship between the number of layers of carbon-loaded PU foam and the attenuation value according to embodiments of the invention.
FIG. 9 is a flowchart of a method according to embodiments of the current invention.

The figures are only schematic and not restrictive. In the figures, the dimensions of some parts may be exaggerated and not shown to scale for illustrative purposes. Dimensions and relative dimensions do not necessarily correspond to actual embodiments of the invention.

Reference numerals in the claims must not be interpreted to limit the scope of protection.

In the various figures, the same reference numerals refer to the same or similar elements.

### Detailed description of illustrative embodiments

The present invention shall be described with respect to particular embodiments and with reference to certain drawings; however, the invention is not limited thereto but is limited only by the claims.

The terms first, second, third and the like in the description and in the claims are used to distinguish similar elements and not necessarily to describe a sequence, neither in time, nor spatially, nor in rank or in any other way. It should be understood that the terms used in this way are interchangeable under suitable circumstances and that the embodiments of the invention described herein are capable of operating in a different order than that described or presented herein.

Moreover, the terms upper, lower, above, before, and the like are used in the description and claims for descriptive purposes and not necessarily to describe relative positions. It should be understood that the terms used in this way may be interchangeable under given circumstances and that the embodiments of the invention described herein are also capable of operating according to orientations other than those described or depicted herein.

It should be noted that the term "comprising", as used in the claims, should not be interpreted as limited to the means described thereafter; this term does not exclude any other elements or steps. It is thus to be interpreted as specifying the presence of the stated characteristics, values, steps or components referred to, but does not exclude the presence or addition of one or more other characteristics, values, steps or components, or groups thereof. Thus, the scope of the expression "a device comprising means A and B" should not be limited to devices consisting only of components A and B. It means that, with respect to the present invention, A and B are the only relevant components of the device.

Reference throughout this specification to "one embodiment" or "an embodiment" means that a specific feature, structure, or characteristic described in connection with the embodiment is incorporated into at least one embodiment of the present invention. Thus, the occurrence of the expressions "in one embodiment" or "in an embodiment" at various places throughout this specification does not necessarily all refer to the same embodiment, but may do so. Furthermore, the specific features, structures, or characteristics may be combined in any suitable manner, as would be clear to an average skilled person on the basis of this publication, in one or more embodiments.

Similarly, it should be appreciated that in the description of exemplary embodiments of the invention, various features of the invention are sometimes grouped together in a single embodiment, figure, or description thereof with the aim of streamlining disclosure and assisting in the understanding of one or more of the various inventive aspects. In any event, this method of disclosure should not be interpreted as reflecting an intention that the invention requires more features than are explicitly mentioned in each claim. Rather, as the following claims reflect, inventive aspects lie in fewer than all the features of a single previously disclosed embodiment. Thus, the claims following the detailed description are hereby explicitly included in this detailed description, with each standalone claim representing a separate embodiment of this invention.

Furthermore, while some embodiments described herein contain some, but not others, features included in other embodiments, combinations of features of different embodiments are intended to fall within the scope of the invention, and constitute these different embodiments as would be understood by a skilled person. For example, in the following claims, any of the described embodiments may be used in any combination.

Numerous specific details are set out in the description provided here. It is, however, understandable that embodiments of the invention can be carried out without these specific details. In other cases, well-known methods, structures, and techniques have not been shown in detail in order to keep this description clear.

### DEFINITIONS

The following terms are provided solely to enhance the understanding of the invention.

As used herein, and unless otherwise specified, the term "sensor device" refers to an assembly or set of components, arranged to transmit and detect a physical signal, in this case millimetre waves, transmitted and passed through a material. Examples of such a sensor device comprise a configuration with a transmitter-receiver pair on a common support.

As used herein, and unless otherwise specified, the term "transmitter" refers to a component of the sensor device, capable of generating and emitting electromagnetic signals, particularly in the millimetre wave range, towards a material to be measured. Examples are a semiconductor-based source such as a GUNN oscillator, or another highfrequency generator, suitable for millimetre waves.

As used herein, and unless otherwise specified, the term "receiver" refers to a component of the sensor device that detects electromagnetic waves, originating from the transmitter and transmitted through the material, and converts them into a processable electrical signal. Examples are receiver modules with diode detectors or integrated circuits, specifically arranged for high frequencies.

As used herein, and unless otherwise specified, the term "millimetre waves" refers to electromagnetic radiation with a wavelength in the order of magnitude of approximately 1 to 10 millimetres, typically corresponding to frequencies in the range of approximately 30 to 300 GHz. Examples of frequency bands within this range comprise 50-70 GHz or 60-90 GHz, depending on the specific application and regional regulations.

As used herein, and unless otherwise specified, the term "calibration mechanism" refers to a facility, arranged to verify and/or adjust the accuracy of the measurement results by means of reference measurements. Examples are a module with multiple calibration samples and the associated drive to position these samples into the measurement path.

As used herein, and unless otherwise specified, the term "calibration sample" refers to a reference material with a known, predetermined, and reproducible electromagnetic attenuation value that is representative of a given moisture content or attenuation level. Examples are an absorbent support material containing moisture (to provide a simulated moisture value), or a radio-absorbent material with a fixed, defined thickness.

As used herein, and unless otherwise specified, the term "absorbent support material" refers to a physical substrate, capable of retaining and evenly distributing moisture, water, or another liquid. Examples thereof are cellulose-based fibre materials such as, for example, paper substrates, textiles, non-biodegradable woven or non-woven materials. As used herein, and unless otherwise specified, the term "non-biodegradable non-woven material" refers to a fibrous sheet or fleece that is not produced from biodegradable fibres such as cotton or wool, but for example from mineral or glass fibres, wherein the fibres are arranged randomly and bonded together. Examples comprise glass fibre fleece or inorganic composite sponges.

As used herein, and unless otherwise specified, the term "radio-absorbent material" refers to a material, arranged to absorb and attenuate a substantial portion of the electromagnetic energy within a certain frequency range. Examples thereof are carbon- or metal-loaded foam materials, such as foam materials, impregnated with carbon or metal particles, for example polypropylene, polyethylene, or polyurethane foam, impregnated with carbon. Another example are metamaterials, artificial materials with structured layers or patterns that exhibit specific electromagnetic properties, such as structures with alternating conductive and dielectric layers, or multilayer structures with graduated absorbing profiles.

As used herein, and unless otherwise specified, the term "PU foam" refers to a polyurethane foam that, whether or not in modified form, can be used as a material that absorbs or attenuates electromagnetic radiation. Examples thereof are flexible polyurethane foams, impregnated with absorbents, or rigid polyurethane foams with adjusted density to achieve a desired attenuation value.

As used herein, and unless otherwise specified, the term "attenuation value" refers to the extent to which a material reduces or attenuates the intensity of millimetre waves as they pass through that material. Examples of attenuation values are numerical values that correlate with the amount of energy absorption or reflection, as expressed in decibels (dB) or another suitable unit.

As used herein, and unless otherwise specified, the phrase "predetermined and reproducible attenuation value" refers to a specific, predetermined number or spectrum of values that consistently represents the absorption or transmission characteristics of a calibration sample. Examples thereof are a laboratory-determined attenuation coefficient that shows virtually the same measured attenuation upon repeated measurements.

As used herein, and unless otherwise specified, the term "positioning means" refers to all mechanical, pneumatic, manual, or electric actuators and guides, capable of moving one or more calibration samples in such a way that they are or are not positioned into the measurement path of the millimetre waves. Examples comprise linear sliding mechanisms, rotary mechanisms, or robotic arms that automatically position calibration samples for the transmitter and receiver.

As used herein, and unless otherwise specified, the term "control unit" refers to an electronic or software-controlled module that transmits signals to other parts of the system to activate functions or control cycle steps. Examples are a microcontroller, a PLC (Programmable Logic Controller), or an industrial computer that issues start and stop commands for measurements and calibration.

As used herein, and unless otherwise specified, the term "computing unit" refers to the hardware and/or software, arranged to process and convert measurement data and calibration data into relevant parameters, such as moisture content. Examples are DSPs (Digital Signal Processors), microprocessors, or external computer systems with algorithms that translate attenuation measurements into a moisture percentage.

As used herein, and unless otherwise specified, the term "C-frame or O-frame" refers to a load-bearing or support structure with an open side, allowing the sensor device to be positioned over or around a material such that the transmitter and receiver are located on opposite sides of the material. Examples are an industrially common C-shaped arm, placed over a moving web of material, or a closed O-shaped structure with a passage for the material.

As used herein, and unless otherwise specified, the phrase "cross-section of the moisture content" refers to the distribution of moisture content across the width of the material to be measured, as measured at multiple positions perpendicular to the direction of passage. Examples thereof are measurements, taken at regular intervals across the width of a paper web, resulting in a moisture content transect profile.

As used herein, and unless otherwise specified, the term "common movable support structure" refers to a structure or support on which multiple calibration samples are mounted simultaneously, and which can be moved as a whole into the path of millimetre waves. Examples thereof are rotating discs with different calibration samples on the circumference, or linear rail systems onto which multiple samples are mounted side by side.

As used herein, and unless otherwise specified, the term "two-point calibration" refers to a calibration method wherein at least two materials or samples with different known attenuation values are used to establish a function or relationship, such that the measurement results can be related to it. Examples thereof are a low and a high moisture level reference, with which a linear calibration line is defined.

As used herein, and unless otherwise specified, the term "calibration value" refers to the measurement or signal value, obtained when a specific calibration sample is placed into the propagation path of the millimetre waves, and which is used as a reference in the calculation of the actual moisture content in the material to be measured. Examples thereof are digital signal values, read directly from the receiver, or already filtered and preprocessed values, based on internal software.

The invention will now be described by a detailed description of various embodiments of the invention. It is clear that other embodiments of the invention may be configured according to the knowledge of skilled persons without deviating from the technical theory of the invention, wherein the invention is limited only by the terms of the attached claims.

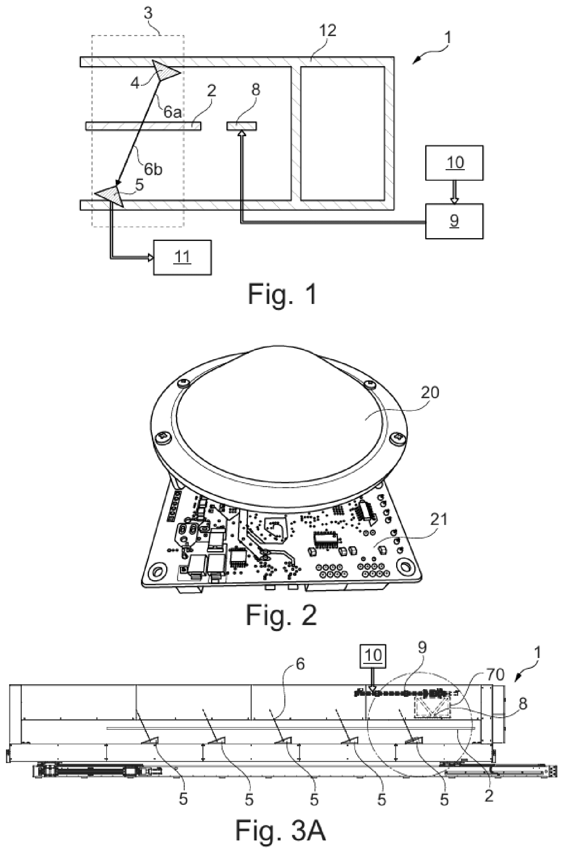

In a first aspect, the present invention relates to a system (1) for measuring moisture content in a material (2). Such a system is conceptually represented in FIG. 1. The system (1) comprises: a sensor device (3) with a transmitter (4) and a receiver (5), arranged to transmit millimetre waves (6a) through the material (2) and to receive the transmitted signal (6b), in order to obtain a measurement value, related to the moisture content of the material at a specific location; a calibration mechanism (7), arranged for performing calibration measurements, the calibration mechanism (7) comprising: one or more calibration samples (8), each consisting of a material with a predetermined and reproducible attenuation value for millimetre waves, wherein the attenuation value is representative of a specific moisture content; and positioning means (9), arranged to place at least one of the calibration samples into the propagation path of the millimetre waves (6) between the transmitter (4) and the receiver (5) in order to obtain a calibration value; a control unit (10), configured to periodically activate the positioning mechanism; a computing unit (11) to calibrate the obtained measurement value by means of the calibration value obtained and the attenuation value of the calibration sample; wherein the system (1) is integrated into a scanning device (12) which is arranged such that the sensor device (3) and the width of the material (2) move relative to each other, in order to obtain a cross-section of the moisture content of the material (2).

FIG. 1 shows a schematic representation of the measurement setup. In the illustrated example, the scanning device (12) consists of a rigid structure in the form of two metal arms, configured as a C-frame. In another embodiment, the scanning device may consist of an O-frame. Both of these frame constructions provide the necessary rigidity and positioning accuracy for reliable measurements across the entire width of the material.

The arms of the frame form a rigid structure on which the sensor device (3) with transmitter (4) and receiver (5) is mounted. The transmitter (4) is intended to emit electromagnetic beams, for example millimetre waves (6). The receiver (5) is arranged to receive the millimetre waves (6). During the measurement process, the intention is that matter - either the material to be measured (2) or a calibration sample (8) - is located into the propagation path of the millimetre waves (6) between transmitter (4) and receiver (5).

The transmitter (4) and receiver (5) are preferably not arranged directly above and below the material to be measured - when it is located into the propagation path of the millimetre waves (6) between transmitter (4) and receiver (5). This means that transmitter (4) and receiver (5) are positioned at an angle to each other relative to the material to be measured, for example at an angle between 15 and 25 degrees, for example an angle of 20 degrees, relative to a perpendicular to the matter, material (2) or calibration sample (8) to be measured.

In the illustrated example, the top module acts as a transmitter (4) and is directed downwards, while the bottom module serves as a receiver (5) and is directed upwards. In an alternative embodiment, the transmitter (4) could be mounted at the bottom and directed upwards, while the receiver (5) is located at the top. The millimetre waves (6) travel as millimetre waves (6a) from the transmitter (4) to the material (2), where a part of the signal is absorbed by water in the material (2), after which the transmitted signal (6b) travels further to the receiver (5).

The moisture measurement system (1) thus generated uses millimetre waves (6) in a transmission arrangement through a material (2). The transmitter (4) - receiver (5) configuration may radiate through the material (2), process the received signal (6a), and in this way determine the moisture content over the entire thickness of the material (2). The system (1), and more specifically the sensor device (3), is configured in accordance with the thickness of the material to be measured (2) and specifications regarding the measurement requirements. For example, the sensor device (3) can be configured to measure thick materials up to approximately 300 mm. The configuration consists of placing the transmitter (4) and receiver (5) at a suitable distance from each other. The thicker the material to be measured, the further apart the transmitter (4) and receiver (5) must be placed, and the wider the measurement beam becomes. In the case of materials that are too thick (2), for example when the thickness is substantially greater than 300 mm, for example greater than 500 mm, the transmitter (4) and receiver (5) must be placed so far apart that the measurement beam measures too large an area at once, causing resolution in the plane of the material (2) to be lost.

Referring to FIG. 2, a 3D view of a sensor module is shown that can function both as a transmitter (4) and a receiver (5). The most striking feature is a large conical structure (20) which forms a plastic dielectric lens. This lens concentrates the millimetre waves (6) into a practically usable measurement spot of a few square centimetres. In embodiments, the transmitter (4) can be configured to emit millimetre waves in a frequency band between 50 and 70 GHz. This frequency band offers an optimal balance between penetration depth and sensitivity to moisture in many industrial materials.

Furthermore, FIG. 2 shows electronic elements. These are preferably chosen to enable a low intrinsic noise level, thereby ensuring high measurement accuracy for moisture determination.

The millimetre waves (6), transmitted through the material, are absorbed by water present in the material (2). After the transmitted signal (6b) is received by the receiver (5), this signal is analysed, and processed into an attenuation value, also called an RSSI value (RSSI = received signal strength indicator, indicator for receiving signal strength), which links the received signal to the amount of moisture in the material (2). The lower the determined RSSI value, the more water is retained or dissolved in the measured material (2).

To realize practical applications, it is essential to keep the sensor device (3) calibrated at all times. Because of the drift, mentioned earlier, in a measuring system, integration into an industrial measuring system with a mechanism for (preferably automatic) feeding of a calibration sample (8) is a must. Creating a calibration sample (8) that is sufficiently stable over time is a challenge. Furthermore, the calibration sample (8) should preferably resemble the material to be measured (2) as much as possible, such that it experiences the same effects from changing measurement conditions, such as changing temperature conditions.

FIG. 3A, 3B, FIG. 4A, 4B, FIG. 5A, 5B illustrate different states of a system (1) for measuring moisture content in a material (2). Each of these figures illustrates a multitude of receivers (5) (the transmitters (4) are not explicitly shown in the figures), material to be measured (2), a calibration sample (8), and positioning means (9) to move the calibration sample (8).

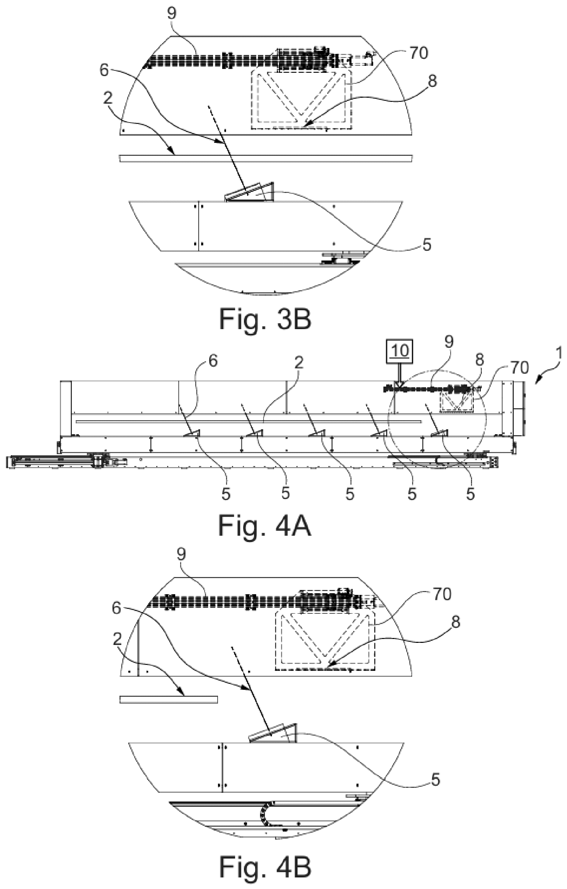

Figs. 3A and 3B show the parking position of the calibration sample (8), wherein the calibration sample (8) is outside the measuring range of the sensor device (2). The machine is in the run-in state, wherein millimetre waves (6) are sent from the transmitter (4) through the material (2) to the receiver (5) for normal measurements. Fig. 3A shows a side view and Fig. 3B a detail of this configuration.

Figs. 4A and 4B show the deployed state of the machine. Material (2) is not located into the propagation path of an extreme transmitter (4) - receiver (5) combination, causing the latter to measure only air. This position allows the system (1) to detect the transition between material (2) and no material. Fig. 4A shows a side view and Fig. 4B a detail of this configuration.

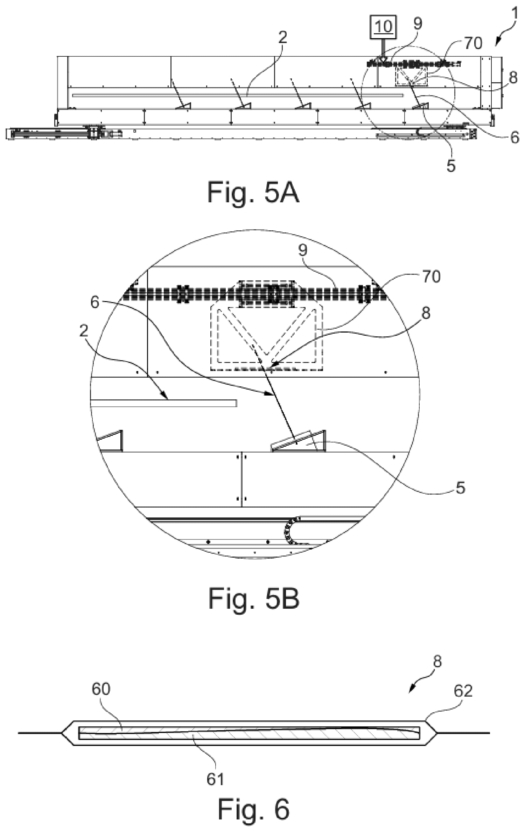

Figs. 5A and 5B show the calibration position wherein the calibration sample (8) is placed into the propagation path of a transmitter (4) - receiver (5) combination using positioning means (9) controlled by a control unit (10). In this position, calibration takes place wherein millimetre waves (6) are sent through the calibration sample (8). The calibration sample (8) can still move left and right to scan different parts or measure multiple samples. Fig. 5A shows a side view and Fig. 5B a detail of this configuration.

In embodiments, the positioning means (9) may be arranged to introduce at least one of the calibration samples (8) into the propagation path of the millimetre waves (6) between the transmitter (4) and the receiver (5) at the instruction of a user. To this end, a user interface may be provided on the system (1). In other or the same embodiments, the positioning means (9) may be arranged to introduce at least one of the calibration samples (8) into the propagation path of the millimetre waves (6) between the transmitter (4) and the receiver (5) in an automatic and repeatable manner. This ensures reliable and consistent calibration without human intervention.

In embodiments, the positioning means (9) can be arranged to linearly move one or more calibration samples (8) into the path of the millimetre waves. This enables an accurate and controlled positioning of the calibration samples (8).

In embodiments, the control unit (10) can be configured to periodically activate the positioning mechanism (9), based on a preset time interval (for example, after the expiration of a preset time interval) or based on predetermined measurement conditions (for example, when the temperature changes), such that automatic calibration of the system (1) takes place. This ensures an optimal calibration strategy, tailored to the specific measurement conditions.

In specific embodiments, the calibration sample (8) may be formed by an absorbent support material (60), for example a non-woven material, wherein a predetermined amount of water (61) is homogeneously distributed. The total is vacuum-drawn and packed in an airtight and waterproof casing (62), such that an attenuation value measured on this calibration sample (8) corresponds to a defined moisture content. This ensures a stable and reliable reference that is representative of materials with specific moisture contents. FIG. 6 illustrates the construction of such a calibration sample (8). This construction with an airtight and waterproof casing (62) ensures that the water cannot evaporate and remains evenly distributed, thus forming a stable reference for calibration. In embodiments, the absorbent support material (8) may be a non-biodegradable non-woven material. This prevents degradation of the material over time and ensures a long-lasting stable calibration sample (8).

Such a calibration sample (8) with an airtight and waterproof casing (62) as a stable reference for moisture measurements is not easily achievable. In alternative specific embodiments, the calibration sample (8), instead of effectively containing a predetermined amount of water, can be formed by a radio-absorbent material wherein the thickness of the radio-absorbent material corresponds to a reproducible attenuation value. This offers an alternative method for calibration that is much easier to produce and maintain. In embodiments, the radio-absorbent material can be made from a material that absorbs and attenuates a significant portion of the electromagnetic energy within a certain frequency range, such as a carbon-loaded foam like PU foam. The use of such PU foam is particularly advantageous because it has predictable and stable radio-absorbent properties that enable reliable calibration. In embodiments, the calibration sample (8) can be formed by multiple layers of a radio-absorbent material. Multiple layers allow for a finer tuning of the calibration reference, leading to higher accuracy.

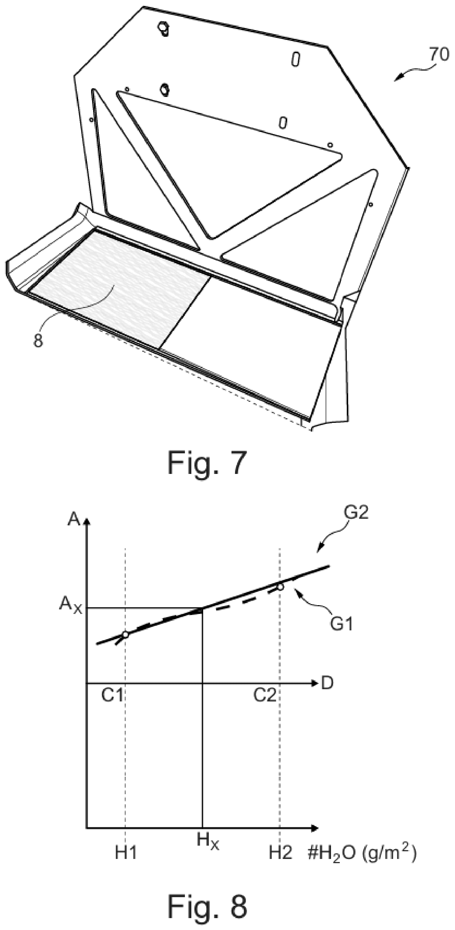

Referring to Fig. 7, a movable support structure (70) is illustrated with space for several different calibration samples (8). Mounting at least two calibration samples (8) on a common movable support structure (70) enables multipoint calibration without the need for multiple separate positioning mechanisms. In the illustrated embodiment, only one calibration sample (8) is present on the support structure (70). In alternative embodiments, for example, two or more calibration samples could be present, each having a different attenuation value. For example, a first calibration sample could contain a single layer of PU foam, while a second calibration sample could contain two stacked layers of PU foam. The support structure (70) can move linearly to position both zones successively into the propagation path of the millimetre waves (6) for a two-point calibration.

The two-point calibration is illustrated in FIG. 8 for a specific embodiment using two calibration samples (C1 and C2) with different numbers of layers of radio-absorbent material, in the example PU foam. The first calibration sample (C1) has a first moisture content (H1), which can be read from the lower part of the graph, on the axis labelled #H₂O(g/m²), and the second calibration sample (C2) has a second moisture content (H2). FIG. 8 shows, on the one hand, in a first graph (G1), attenuation values (A) of the radio-absorbent material as a function of its thickness (D). On the other hand, FIG. 8 also shows a second graph (G2) with a correlation curve, in this case a linear model, for the relationship between the number of layers of PU foam (x-axis) and the resulting attenuation (y-axis). The correlation curve (G2), a straight line in the illustrated example, connects two measurement points: one for a single layer of foam with a specific initial thickness, and one for two layers, consequently totalling twice the thickness. FIG. 8 shows that the effective attenuation behaviour of the radio-absorbent material does not behave entirely linearly (see first graph (G1)), but in general applications, the behaviour can be approximated by a linear relationship (second graph (G2)). This linear relationship, generally the resulting correlation curve, can then ultimately be used to correlate measured attenuation to specific moisture levels. In this process, a specific attenuation signal (Ax) is measured on a material to be measured (2), which is then correlated via the correlation curve (G2) to a corresponding moisture content (Hx) (H₂O grammage on the lower part of the graph).

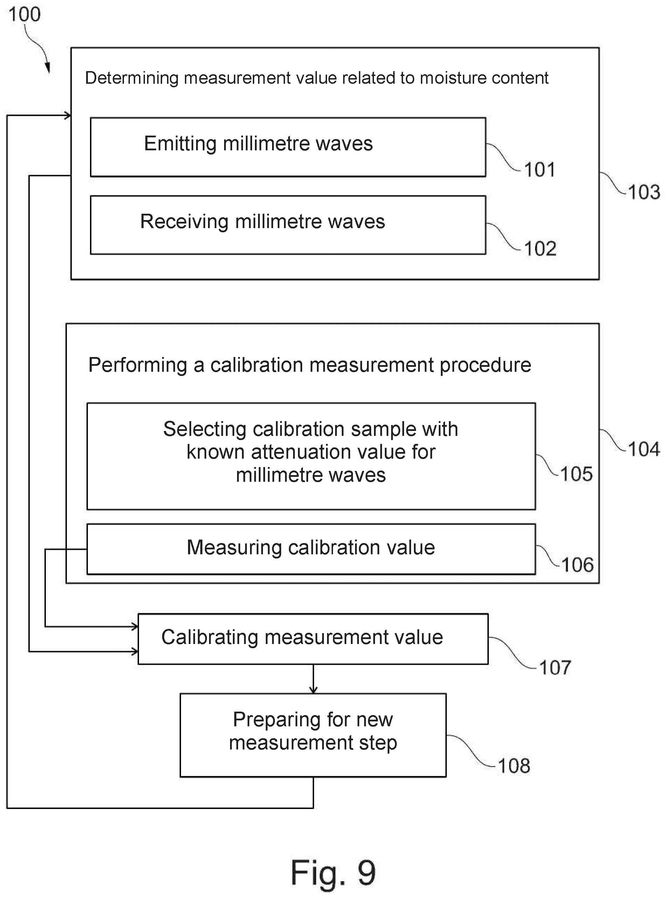

In a second aspect, illustrated in FIG. 9, the present invention relates to a method (100) for measuring moisture content in a material, comprising the steps of: transmitting (101) millimetre waves through a transmitter (4) through a material to be measured and receiving (102) the transmitted signal through a receiver (5), positioned on an opposite side of the material (2) relative to the transmitter (4), in order to obtain a measured value (103) which is related to the moisture content of the material (2) at a specific location; periodically performing (104) a calibration measurement procedure, comprising: selecting (105) at least one calibration sample (8) with a predetermined and reproducible attenuation value for millimetre waves, where the attenuation value is representative of a specific moisture content; positioning the selected calibration sample (8) in the propagation path of the millimetre waves (6) between the transmitter (4) and the receiver (5) to obtain a calibration value (106); using the calibration value and the attenuation value of the calibration sample (8) to calibrate the obtained measurement (107); moving the transmitter (4) - receiver (5) combination and the width of the material (2) relative to each other (108), and repeating the steps to obtain a cross-section of the moisture content of the material (2).

In embodiments, the calibration measurement procedure can be performed periodically (104), based on a preset time interval or predetermined measurement conditions. This ensures an optimal balance between measurement efficiency and calibration accuracy.

In embodiments, the step of performing (104) a calibration measurement procedure may comprise: sequentially positioning at least two different calibration samples (8), each with a different reproducible millimetre wave attenuation value (6), into the propagation path between the transmitter (4) and the receiver (5); obtaining at least two corresponding calibration values; and constructing a calibration function, based on the relationship between the attenuation values of the calibration samples and the corresponding calibration values, for performing a two-point calibration of the measurement obtained in step. Two-point calibration increases the accuracy of measurements over a wider range of moisture levels. A multi-point calibration can be performed if more calibration samples (8) are used. The use of multiple calibration samples (8) allows to establish an accurate correlation curve between attenuation and moisture content, which leads to more reliable measurements. The determined correlation curve can be linear. A linear relationship simplifies the calibration procedure and enables fast, reliable conversion of measured values into moisture contents.

In a third aspect, the present invention relates to a computer program product comprising instructions which, when executed by a computer, cause a moisture measurement system with millimetre waves to perform the method according to the second aspect.

In a fourth aspect, the present invention relates to a computer-readable medium containing programme code, comprising instructions which, when executed by one or more processors, cause a moisture measurement system with millimetre waves to perform the method according to the second aspect.

### EXAMPLE 1: Evaluation of an automatic calibration mechanism for millimetre wave-based moisture measurement in an industrial flat semi-finished product

This experiment was conducted to evaluate the effectiveness of a newly developed automatic calibration mechanism for a millimetre wave-based moisture measurement system. The aim was to demonstrate that the system, with integrated periodic calibration, was capable of performing accurate and stable moisture measurements over extended periods under industrial conditions, without being affected by the slow drift characteristic of conventional moisture sensors.

The measurement system consisted of two Hammer-IMS Rio modules, modified with special firmware to function as a transmitter and receiver, respectively. The modules were mounted on a rigid aluminium C-frame, wherein the transmitter is positioned above and the receiver below the material to be measured, both at an angle of 20 degrees relative to the material. Each module was equipped with a plastic dielectric lens with a diameter of 90 mm that focused the millimetre waves into a measurement area of approximately 35 cm². The transmitter operated at a frequency of 60 GHz. The entire frame was mounted on a linear axis that allowed movement across the full width of the test material.

Two types of calibration samples were developed and tested for the calibration mechanism. The first type was an aqueous calibration sample, consisting of a non-biodegradable non-woven material (HP-Textiles HP-VP150P polyester with a base weight of 150 g/m²) wherein a precisely determined amount of water (400 g/m²) was homogeneously distributed. This sample was vacuum-packed in a polyethylene bag with a thickness of 75 µm and thermally sealed to prevent evaporation of the water. The second type consisted of a flat absorbent material based on PU foam (Holland Shielding 3650-10), used in two configurations: one layer (10 mm) and two layers (20 mm).

Both types of calibration samples were mounted on a linearly moving support structure integrated into the measuring frame. Under computer control, this support structure could position the selected calibration sample in the path between the transmitter and receiver for periodic calibration. The system was programmed to automatically switch between measurement mode (measuring the material) and calibration mode (wherein a calibration sample was measured) according to a preset schedule. The practical implementation of the calibration mechanism in an industrial environment was evaluated by setting up a simulated production procedure. In this procedure, the measuring frame was integrated into an existing production line for flat semi-finished products, wherein the material passed under the measuring frame at a constant speed. The system was programmed to perform an automatic calibration every 30 minutes, wherein the scanning process was temporarily interrupted. The total interruption time for calibration was approximately 10 seconds, which was acceptable given the production speed.

The automatic calibration procedure effectively compensated for slow drift in the measured values, enabling the system to perform reliable absolute moisture measurements under varying environmental conditions.

The results of this experiment confirmed that the millimetre wave moisture measurement system with integrated automatic calibration mechanism met the requirements for accuracy, stability, and practical usability in industrial applications.

EXAMPLE 2: Industrial glass wool insulation material with a nominal thickness of 180 mm and a base weight of 1975 g/m² was used as test material. The material was exposed to variable concentrations of water vapor in order to apply four different moisture levels within the material in succession: 0 % (dry), 2 %, 4 %, and 8 % (mass percentage of water relative to total weight). The exact moisture content was verified using standard weighing.

In a first phase, the system operated without periodic calibration, and a temperature drift of 2 % per degree Celsius was observed. The drift thus showed a correlation with variations in ambient temperature. In a second phase, calibration was applied using the aqueous calibration sample. In a third phase, calibration was applied using the PU foam calibration samples.

During each phase, RSSI values were recorded and subsequently converted into moisture levels using a predetermined calibration model. Ambient temperature and relative humidity were measured continuously and varied between 18-25 °C, respectively, during the experiment.

In the second phase, with calibration using the aqueous calibration sample, drift was significantly reduced. This was also the case for the third phase, wherein PU foam was used for calibration.

It is to be understood that although preferred embodiments, specific constructions and configurations, as well as materials, have been discussed herein for devices according to the present invention, various changes or modifications in form and detail may be made without deviating from the scope of this invention. For example, functionality may be added to or removed from block diagrams and operations may be exchanged between functional blocks Steps may be added to or removed from methods described within the scope of the present invention.

## Claims

1. A system (1) for measuring moisture content in a material (2), the system comprising:
(a) a sensor device (3) with a transmitter (4) and a receiver (5), arranged to transmit millimetre waves (6a) through the material (2) and to receive the transmitted signal (6b), in order to obtain a measurement value, related to the moisture content of the material (2) at a specific location;
(b) a calibration mechanism (7), arranged for performing calibration measurements, the calibration mechanism comprising:
(i) one or more calibration samples (8), each consisting of a material with a predetermined and reproducible attenuation value for millimetre waves, wherein the attenuation value is representative of a specific moisture content; and
(ii) positioning means (9), arranged to place at least one of the calibration samples into the propagation path of the millimetre waves (6) between the transmitter (4) and the receiver (5) in order to obtain a calibration value;
(c) a control unit (10), configured to periodically activate the positioning mechanism;
(d) a computing unit (11) to calibrate the obtained measurement value by means of the calibration value obtained and the attenuation value of the calibration sample; wherein the system is integrated into a scanning device (12) which is arranged such that the sensor device (3) and the width of the material (2) move relative to each other, in order to obtain a cross-section of the moisture content of the material (2).

2. The system (1) according to claim 1, where the positioning means (9) are arranged to place at least one of the calibration samples (8) in the propagation path of the millimetre waves (6) between the transmitter (4) and the receiver (5) in an automated and repeatable manner.

3. The system (1) according to any one of the preceding claims, wherein the positioning means (9) are arranged to linearly move the one or more calibration samples (8) into the path of the millimetre waves (6).

4. The system (1) according to any one of the preceding claims, wherein the control unit (10) is configured to periodically activate the positioning mechanism, based on a preset time interval or predetermined measurement conditions, such that automatic calibration of the system takes place.

5. The system (1) according to any one of the preceding claims, wherein the calibration sample (8) is formed by an absorbent support material wherein a predetermined amount of water is homogeneously distributed, and which is enclosed by an airtight and watertight casing, such that the attenuation value corresponds to a defined moisture content.

6. The system (1) according to any one of claims 1 to 4, wherein the calibration sample (8) is formed by a radio-absorbent material, wherein the thickness of the radio-absorbent material corresponds to a reproducible attenuation value.

7. The system (1) according to any one of the preceding claims, wherein the scanning device (12) comprises a C-frame or an O-frame.

8. The system (1) according to any one of the preceding claims, wherein the transmitter (4) is arranged to transmit millimetre waves (6a) in a frequency band between 50 and 70 GHz.

9. The system (1) according to any one of the preceding claims, wherein at least two calibration samples (8) are mounted on a common movable support structure (70).

10. A method (100) for measuring moisture content in a material (2), comprising the steps of:
(a) transmitting (101) millimetre waves (6a) via a transmitter (4) through a material to be measured (2) and receiving the transmitted signal (6b) by a receiver (5), positioned on an opposite side of the material (2) relative to the transmitter (4), in order to obtain (103) a measurement value, related to the moisture content of the material (2) at a specific location;
(b) periodically performing (104) a calibration measurement procedure, comprising:
(i) selecting (105) at least one calibration sample (8) with a predetermined and reproducible attenuation value for millimetre waves, wherein the attenuation value is representative of a specific moisture content;
(ii) positioning the selected calibration sample in the propagation path of the millimetre waves (6) between the transmitter (4) and the receiver (5) in order to obtain a calibration value (106);
(c) using the calibration value and the attenuation value of the calibration sample to calibrate the measurement value, obtained from step (a) (107);
(d) moving (108) the transmitter (4)-receiver (5) combination and the width of the material (2) relative to each other, and
(e) repeating steps (a), (c), and (d) in order to obtain a cross-section of the moisture content of the material (2).

11. The method (100) according to claim 10, wherein periodically performing (104) the calibration measurement procedure is carried out based on a preset time interval or predetermined measurement conditions.

12. The method (100) according to any one of claims 10 or 11, wherein the step (b) of performing (104) a calibration measurement procedure comprises:
(i) sequentially positioning (105) at least two different calibration samples, each with a different reproducible attenuation value for millimetre waves, into the propagation path between the transmitter (4) and the receiver (5);
(ii) obtaining at least two corresponding calibration values; and
(III) constructing a calibration function, based on the relationship between the attenuation values of the calibration samples and the corresponding calibration values, for performing a two-point calibration of the measurement value, obtained in step (a).

13. The method (100) according to any one of claims 10 to 12, where step (c) involves using the calibration values, obtained from at least two different calibration samples with different known attenuation levels, to determine a relationship between attenuation and moisture content.

14. A computer program product comprising instructions which, when executed by a computer, cause a moisture measurement system with millimetre waves to perform the method (100) according to any one of claims 10 to 13.

15. A computer-readable medium containing program code, comprising instructions which, when executed by one or more processors, cause a moisture measurement system with millimetre waves to perform the method (100) according to any one of claims 10 to 13.
